Europäisches Patentamt

European Patent Office

Office européen des brevets

(19)

(11) EP 0 964 463 A2

(12) EUROPEAN PATENT APPLICATION

(43) Date of publication:
15.12.1999 Bulletin 1999/50

(51) Int Cl.$^6$: **H01M 4/48**, H01M 4/50, H01M 10/40, C01G 45/12

(21) Application number: 99302698.8

(22) Date of filing: 07.04.1999

(84) Designated Contracting States:
AT BE CH CY DE DK ES FI FR GB GR IE IT LI LU MC NL PT SE
Designated Extension States:
AL LT LV MK RO SI

(30) Priority: 12.06.1998 US 89252 P
27.10.1998 US 181221

(71) Applicant: **ROHM AND HAAS COMPANY**
Philadelphia, Pennsylvania 19106-2399 (US)

(72) Inventors:
• **Brese, Nathanial Eric**
Lansdale, Pennsylvania 19446 (US)

• **Gallagher, Michael Kenrick**
Lansdale, Pennsylvania 19446 (US)
• **Huang, Jian**
Bensalem, Pennsylvania 19020 (US)

(74) Representative: **Buckley, Guy Julian et al**
ROHM AND HAAS (UK) LTD.
European Operations Patent Department
Lennig House
2 Mason's Avenue
Croydon CR9 3NB (GB)

(54) **Lithium manganate composition**

(57) The present invention provides a phase-pure refractory-metal-doped lithium manganate spinel composition prepared by spray pyrolysis. The present invention also provides an electrochemical secondary element comprising a non-aqueous electrolyte, a negative electrode, and a positive electrode, wherein the positive electrode is prepared with the phase-pure spinel composition. The electrochemical secondary cells according to the present invention have considerably reduced discharge capacity fade rates as compared to cells comprising spinels which are not phase-pure.

EP 0 964 463 A2

**Description**

This invention relates to phase-pure refractory-metal-doped lithium manganate spinel compositions. This invention also relates to a method of making phase-pure refractory-metal-doped lithium manganate spinel compositions. This invention further relates to a secondary element having a positive electrode, a negative electrode, and a non-aqueous electrolyte, in which at least one of the electrodes contains phase-pure refractory-metal-doped lithium manganate spinel compositions.

## BACKGROUND

There is a need for secondary elements, also referred to as batteries, having thermal stability, high energy density, efficient rechargeability and low weight. While these objectives have been met, in part, with lithium containing systems, there continues to be a need for rechargeable systems. This requires, among other things, that the electrodes be chemically stable in contact with the electrolyte, especially over the course of many charge/discharge cycles.

Lithium-based electrodes do not meet these requirements when in use over extended periods of time, even in organic electrolytes with an aprotic solvent, because the cycling stability of lithium-based electrodes is poor. One attempt at overcoming this drawback is alloying lithium with another metal, preferably aluminum. By so doing, the reduced energy content of the alloyed electrode is offset by the benefit of better rechargeability, higher mechanical strength, and improved safety.

Another recent approach to improve the performance of lithium electrodes involves intercalation compounds. With such compounds, the cell's electrode incorporates a material of predetermined structure, such as lithium manganate spinel, which forms an appropriate "host" or recipient grid for electrochemically active species of lithium ions that are present in the electrolyte. These ions, in this instance $Li^+$, are either stored ("charged") or released ("discharged") depending upon the polarity of an externally applied potential. During discharge, the electromotive force which is produced, and which manifests itself in the tendency to reverse the forced intercalation is used for current production.

One suitable intercalation compound is a spinel-type electrode of the general composition $Li_q M_x Mn_y O_z$ in which the recipient substance of the negative electrode receives the $Li^+$ ions and is either a carbon product (such as that obtained by pyrolysis of an organic compound), a metal oxide (such as tin oxide), lithium metal or a lithium-metal alloy, or alternative materials capable of acting as a host for $Li^+$ ions.

Japanese Patent Publications Kokai No. Hei 09-245836 by Miyasaka discloses lithium ion secondary batteries. These batteries include a positive electrode incorporating active materials primarily composed of lithium manganate spinel having the composition $Li_x Mn_{2-a} M_{a/c} O_{4+b}$ wherein M is a metal dopant selected from Co, Fe, Cr, Cu, Ni, Zr, Nb, Y, Al, Na, K, Mg, Ca, Cs, La, Ce, Nd, Sm and Eu, wherein $0.1 < x < 1.2$, $0 < a < 2$, $1 < c < 3$, $0 < b < 0.3$, and wherein the active materials have a protective layer incorporating the oxide of the metal, (e.g., $ZrO_2$ when M is Zr). Miyasaka teaches that the metal-doped lithium manganate spinel is prepared by reacting lithium salts with manganese and metal salts or oxides in the solid phase at high temperatures (350°C to 900°C) and long reaction times (8 to 48 hours). However, compositions prepared by this method result in materials that are not phase-pure because long reaction times lead to phase separation which reduces the performance of secondary electrochemical elements incorporating these materials.

The metal oxide protective layer taught by Miyasaka is electrochemically inactive and thereby does not contribute to the charge and discharge capacity of the electrochemical secondary cell. The metal oxide is often classified as a refractory material. Refractory materials withstand high temperatures without melting or decomposing, and remain unreactive and inert when exposed to severe environments [W. D. Callister, Jr., Materials Science and Engineering: An Introduction; John Wiley & Sons, Inc., NY, 1994]. Such materials are often produced from early transition metals, such as Ti, Zr, Hf, V, Nb, Ta, Mo, and W. These metals have limited affinity for forming ternary compounds. Incorporation of such unreactive metals (hereafter referred to as "refractory metals") into the spinel structure while avoiding the formation and phase separation of the refractory metal oxide is, therefore, not expected to be readily possible using the conventional methods described *supra*. Furthermore, one cannot separate the refractory metal oxide from the lithium manganate spinel material. Hence, it is desired to provide refractory-metal-doped lithium manganate spinel compositions having essentially no refractory metal oxide phase.

United States Patent No. 5,589,300 by Fauteux teaches a spray pyrolysis method for preparing fine particle electrode materials for use in an electrochemical cell by generating droplets of a precursor in a carrier liquid, removing the carrier liquid from the droplets to obtain precursor particles, converting the particles into particles of the electrode material, and depositing the electrode material onto an electrically conductive substrate. Although Fauteux teaches the preparation of undoped lithium manganate particles, Fauteux does not teach the use of the spray pyrolysis method to prepare phase-pure refractory-metal-doped lithium manganate spinel particles.

The effects of providing phase-pure refractory-metal-doped lithium manganate spinels incorporating refractory metal cations on the performance of rechargeable lithium ion batteries have been heretofore unknown. The present inventors have now developed phase-pure refractory-metal-doped lithium manganate spinel compositions. The present inventors have also discovered that secondary electrochemical cells fabricated with electrodes incorporating the phase-pure refractory-metal-doped lithium manganate spinels of the present invention have lower discharge capacity fade rates (and therefore better high temperature stability) than secondary electrochemical cells incorporating prior art electrodes. The present inventors have further developed a method for preparing phase-pure refractory-metal-doped lithium manganate spinel powders.

## STATEMENT OF INVENTION

In a first aspect of the present invention, there is provided a substantially phase-pure composition comprising a compound of the formula $Li_q M_x Mn_y O_z$, wherein

M is selected from the group of refractory metals consisting of titanium, zirconium, hafnium, vanadium, niobium, tantalum, molybdenum, tungsten, and mixtures thereof,
q is in the range of from 0 to 1.3,
x is in the range of from 0.0001 to 0.2,
y is in the range of from 1.8 to 2.0, and
z is in the range of from 3.8 to 4.2.

In a second aspect of the present invention, there is provided an electrochemical secondary element having a positive electrode, a negative electrode, and a non-aqueous electrolyte, wherein at least one electrode comprises a compound incorporating a composition including a substantially phase-pure compound of the formula $Li_q M_x Mn_y O_z$, wherein

M is selected from the group of refractory metals consisting of titanium, zirconium, hafnium, vanadium, niobium, tantalum, molybdenum, tungsten, and mixtures thereof,
q is in the range of from 0 to 1.3,
x is in the range of from 0.0001 to 0.2,
y is in the range of from 1.8 to 2.0, and
z is in the range of from 3.8 to 4.2.

In a third aspect of the present invention, there is provided a method for preparing a substantially phase-pure refractory-metal-doped lithium manganate spinel powder comprising the steps of

i) providing an acidic aqueous composition including

a) water,
b) lithium ions,
c) manganese ions, and
d) refractory metal ions selected from the group consisting of titanium ions, zirconium ions, hafnium ions, vanadium ions, niobium ions, tantalum ions, molybdenum ions, and tungsten ions, and combinations thereof,

ii) forming droplets of the acidic aqueous composition, and
iii) heating the droplets in an oxygen-containing atmosphere to a temperature from 400°C to 1100°C to form the powder.

## DETAILED DESCRIPTION OF THE INVENTION

Terms used to describe the present invention are defined as follows:
The term "polymeric" is understood to include within its scope all types of molecules characterized as having repeating units of atoms or molecules linked to each other such as oligomers, homopolymers, co-polymers including block, random and alternating co-polymers, grafted polymers and co-polymers, terpolymers, etc.
The term "secondary electrochemical cell" refers to a rechargeable battery .
The term "cathode" refers to a positive electrode.
The term "anode" refers to a negative electrode.
The term "JCPDS-ICDD" refers to the standard x-ray powder diffraction database available from the International Centre for Diffraction Data, Newtown Square, Pennsylvania.
The term "JCPDS File No." refers to the JCPDS file number in which is recorded the x-ray diffraction data for a particular crystalline composition.

The term "spinel" refers to the crystalline phase of lithium manganate.

The term "dopant" refers to the atom which is substituted for another atom in a compound.

The term "doped" refers to a composition having a dopant.

The term "metal-doped" refers to a compound having a dopant which is a metal.

The term "pyrolysis" refers to the process by which a change in chemical composition is brought about by applying heat.

The phase-pure refractory-metal-doped lithium manganate spinel composition of the present invention has the formula $Li_qM_xMn_yO_z$, wherein M is a refractory metal. The refractory metals are selected from the transition elements titanium, zirconium, hafnium, vanadium, niobium, tantalum, molybdenum, and tungsten, and preferably zirconium, hafnium, and molybdenum, and more preferably zirconium.

The value of q is in the range of from 0 to 1.3, and preferably in the range of from 0.90 to 1.10. The value of x is in the range of from 0.0001 to 0.2, preferably in the range of from 0.001 to 0.10, and more preferably in the range of from 0.01 to 0.10. The value of y is in the range of from 1.8 to 2.0, preferably in the range of from 1.89 to 2.0, and more preferably in the range of from 1.95 to 2.0. These ranges are all inclusive.

Depending upon the value of the parameters $0.0001 < x < 0.2$ and $1.8 < y < 2.0$, up to about 10% of the manganese can be replaced by other metals. The value of z is in the range of from 3.8 to 4.2, and preferably in the range of from 3.9 to 4.1.

If x becomes larger than about 0.20, formation and phase separation of the metal oxide phase will occur, thereby reducing the amount of active phase-pure refractory-metal-doped lithium manganate spinel present in the composition. Therefore, it is preferred that x is below about 0.20 in order to ensure that the composition is substantially free of one or more oxide phases of M, although the maximum value of x could change with different choices of M.

The phase purity of crystalline materials is readily identifiable by the x-ray diffraction ("XRD") pattern. XRD patterns from highly crystalline phase-pure materials are characterized by sharp diffraction peaks, which are reported in terms of the positions ("d-spacings", Angstroms) and relative intensities (most intense peak is assigned a value of 100) of the diffraction peaks. The d-spacing ("d") is determined by the relationship: lambda = 2d sin(theta), wherein lambda is the wavelength of x-rays (copper K-alpha wavelength is 1.54 Angstroms) and theta is the x-ray scattering angle.

Compositions of the present invention have substantially no x-ray diffraction (XRD) peaks which are different than the XRD peaks assigned to lithium manganate ("$LiMn_2O_4$" or "spinel"). Therefore, the compositions according to the present invention are "substantially phase-pure" and have the same crystal structure as spinel. Here, "substantially phase pure" refers to compositions according to the invention wherein the maximum relative intensity of a diffraction peak that is not associated with the spinel composition is less than or equal to one, preferably less than or equal to 0.7, and more preferably less than or equal to 0.4.

The d-spacings and relative intensities of the eight most intense XRD peaks for lithium manganate (JCPDS File No. 35-0782, $LiMn_2O_4$), zirconium oxide (JCPDS File No. 37-1484, $ZrO_2$), and manganese oxide (JCPDS File No. 24-508 $Mn_2O_3$) are given in Table 1. In phase-pure metal-doped lithium manganate spinels, the metal-dopant atoms replace Mn atoms in the crystalline structure without changing the overall crystalline structure. As a result, the metal-doped lithium manganate spinel compositions provide substantially similar x-ray diffraction patterns to that of undoped lithium manganate. However, the presence of XRD peaks different from JCPDS File No. 35-0782 for $LiMn_2O_4$ listed in Table 1 would indicate that the sample is not phase-pure. For example, $ZrO_2$ has its strongest diffraction peaks at d-spacings of 3.165 and 2.841 Angstroms, respectively, and these diffraction peaks do not overlap with the diffraction peaks of $LiMn_2O_4$. Hence, the presence of diffraction peaks at 3.165 and 2.841 Angstroms in Zr-doped lithium manganate spinel compositions would indicate the presence of $ZrO_2$ phase impurities. Therefore, compositions of the present invention have an x-ray diffraction pattern wherein the d-spacings of the eight strongest diffraction peaks are at 4.76, 2.49, 2.38, 2.06, 1.89, 1.59, 1.46, and 1.39 Angstroms. Also compositions of the present invention preferably have an x-ray diffraction pattern wherein diffraction peaks are substantially absent at 3.17, 2.84, and 2.62 Angstroms.

Table 1:

| Characteristic XRD Reference Peak Positions | | | | | | | | |
|---|---|---|---|---|---|---|---|---|
| **JCPDS File No.** | Strongest Diffraction Peak Positions: $\frac{\text{d-spacing (Angstroms)}}{\text{Relative Intensity}}$ | | | | | | | |
| Ref. 35-0782 $LiMn_2O_4$ | $\frac{4.764}{100}$ | $\frac{2.487}{38}$ | $\frac{2.381}{10}$ | $\frac{2.062}{33}$ | $\frac{1.892}{7}$ | $\frac{1.587}{10}$ | $\frac{1.458}{16}$ | $\frac{1.394}{7}$ |
| Ref. 37-1484 $ZrO_2$ | $\frac{3.165}{100}$ | $\frac{2.841}{68}$ | $\frac{2.623}{21}$ | $\frac{2.540}{13}$ | $\frac{2.214}{12}$ | $\frac{1.848}{18}$ | $\frac{1.819}{22}$ | $\frac{1.804}{13}$ |

Table 1:   (continued)

| Characteristic XRD Reference Peak Positions | | | | | | | | |
|---|---|---|---|---|---|---|---|---|
| JCPDS File No. | Strongest Diffraction Peak Positions: $\frac{\text{d-spacing (Angstroms)}}{\text{Relative Intensity}}$ | | | | | | | |
| Ref. 24-508 Mn$_2$O$_3$ | $\frac{3.844}{18}$ | $\frac{2.719}{100}$ | $\frac{1.664}{27}$ | $\frac{2.007}{9}$ | $\frac{1.846}{10}$ | $\frac{1.664}{27}$ | $\frac{1.452}{4}$ | $\frac{1.420}{11}$ |

The electrochemical secondary element of the present invention has a positive electrode, a negative electrode, and a nonaqueous electrolyte, wherein at least one electrode incorporates a compound of the composition of the present invention.

Positive electrodes are preferably prepared by preparing a dispersion of an active material powder, a conductive carbon powder and a polymeric binder in solvent. The dispersion is cast as positive electrode films between 100 and 500 microns thick, preferably 200 to 300 microns thick, onto metal foil. Metal foils include any common metal that is readily available such as copper, nickel, stainless steel, and preferably aluminum. The positive electrode films are dried and pressed between two or more polished metal plates at pressures between 0.5 and 5 megapascals ("MPa"), preferably between 1 and 2 MPa for one to five minutes to form the positive electrodes.

The total amount of active material powder in the positive electrode dispersions is from 65 to 95 parts, preferably 80 to 90 parts, by weight based on dry film weight. Suitable active material powders have the formula Li$_q$M$_x$Mn$_y$O$_z$, wherein M is selected from the group of refractory metals consisting of titanium, zirconium, hafnium, vanadium, niobium, tantalum, molybdenum, tungsten, and mixtures thereof, wherein q is in the range of from 0 to 1.3, x is in the range of from 0.0001 to 0.2, y is in the range of from 1.8 to 2.0, z is in the range of from 3.8 to 4.2, and wherein the composition is substantially phase-pure. Other active material powders known in the art (such as lithium cobalt oxide ("LiCoO$_2$"), lithium nickel oxide ("LiNiO$_2$"), and lithium nickel-cobalt oxide ("Li(Ni,Co)O$_2$")) may optionally be added to the positive electrode dispersions.

The amount of carbon powder in the positive electrode dispersions is from 5 to 25 parts, preferably 6 to 13 parts, by weight based on dry film weight. It is known that conductive carbon powders impart electrical conductivity to the electrode which does not undergo any chemical change in the assembled battery. Suitable conductive carbon powders include various naturally occurring graphites such as scaly graphite, flakey graphite and clayey graphite, artificial graphite, carbon black, needle coke, acetylene black, ketchen black, carbon fibers, fullerenes, polyphenylene derivatives, and mixtures thereof. Although powdery metals are also known to impart electrical conductivity to electrodes, the use of graphite is preferred because the resulting secondary electrochemical element exhibits improved charge-discharge cycle life and the use of acetylene black is preferred because the resulting secondary electrochemical cell has high charge and discharge capacities.

The amount of polymeric binder in the positive electrode dispersions is from 3 to 15 parts, preferably 5 to 10 parts, by weight based on dry film weight. Suitable polymeric binders which are known are starch, polyvinyl alcohol, carboxymethyl cellulose, hydroxypropyl cellulose, regenerated cellulose, diacetyl cellulose, polyvinyl chloride, polyvinylpyrrolidone, polyethylene, polypropylene, ethylene-propylene-diene terpolymer ("EPDM"), styrene-butadiene rubber ("SBR"), and polyethylene oxide, poly(n-alkyl methacrylates) and poly(n-alkyl acrylates). Preferred polymeric binders include fluoropolymers such as polyvinylidene difluoride ("PVDF"), and other polymers and copolymers synthesized from one or more fluorinated monomers such as vinylidene difluoride, tetrafluoroethylene, and hexafluoropropylene.

Polymeric binders are preferably dissolved in a solvent between 10 and 15 % based on weight polymeric binder to prepare the dispersion. Solvents are selected from those commonly known to dissolve the polymeric binder. A list of solvents for polymers can be found in The Polymer Handbook, 3$^{rd}$ Edition, Brandrup and Immergut, Eds., John Wiley & Sons, Inc., 1989. A common solvent useful for dissolving PVDF polymeric binder is 1-methyl-2-pyrrolidinone ("NMP").

Negative electrodes are fabricated with a dispersion of an active material powder, a conductive carbon powder and a polymeric binder in solvent, as described above for positive electrodes. Other negative electrode materials which are known include metals containing lithium (such as elemental lithium, and lithium alloys such as lithium-aluminum alloy and lithium-tin alloy) and glass-forming alloys containing tin, boron, phosphorus, silicon, and carbon. The negative electrode materials are in contact with a stainless steel, copper, or aluminum film or foil to act as a current collector.

Non-aqueous electrolytes suitably have a liquid, paste-like, gel-like or solid form. Preferably, the electrolyte includes a lithium salt dissolved in an organic solvent. Lithium salts which are useful in this regard have one of the following anions: ClO$_4^-$, BF$_4^-$, AsF$_6^-$, CF$_3$SO$_3^-$, PF$_6^-$, I$^-$, CF$_3$SO$_3$N$^-$ or AlClO$_4^-$. Organic solvents for these salts are: tetrahydrofuran, 2-methyltetrahydrofuran, acetonitrile, propionitrile, 4-methyl-2-pentanone, butyronitrile, valeronitrile, benzonitrile, 1,2-dichlorethane, γ-butyrolactone, dimethoxyethane, dioxolane, methylformiate, propylene carbonate ("PC"), diethyl carbonate ("DEC"), ethylene carbonate ("EC"), nitromethane, dimethylformamide, sulfolane, 3-methylsulfolane, trimethylphosphate, and other like organic solvents, and mixtures of one or more of these solvents.

It is also known that the electrolyte can be immobilized by inorganic oxygen containing compounds such as $SiO_2$, $Al_2O_3$, $TiO_2$, MgO, $B_2O_3$, $Na_2SO_4$ or $AlPO_4$, which form a gel with the organic solvent. Solvents useful with such immobilizing oxides are PC, EC, DEC, acetonitrile, $\gamma$-butyrolactone, nitromethane, tetrahydrofuran, 2-methyl-tetrahydrofuran, dimethoxyethane, dioxolane, and mixtures of one or more of these solvents. These finished electrodes have a pasty or semi-solid consistency.

A different way of immobilizing the electrolyte involves forming polyether-complexes of the alkaline salts (e. g., with polyethylene oxide) which have the properties of a solid ion conductor. In such case, the lithium salt used as the electrolyte component is an ingredient of a polymeric electrolyte matrix with polyethylene oxide as the framework. Ceramic alkaline ion conductors can also be used as solid electrolytes.

An alternate approach of immobilizing the electrolyte involves the preparation of a solid polymer electrolyte wherein the polymeric backbone is vinyl based and the macromonomer contains a pendant polyalkyleneoxide chain of a controlled length as disclosed in U.S. Patent 5,194,490. Thus a radical polymerization promoter is dissolved in a specific polyether based macromonomer such as alkoxypolyalkyleneoxide(meth)acrylate and then mixed with a second solution in which a free radical initiator (e.g., benzoyl peroxide) and a lithium salt (e.g., lithium perchlorate) is dissolved in a non-aqueous solvent and/or a polyether based oligomer (e.g., dimethoxy polyethyleneglycol). Molecular weight of the polymer can be controlled by a free radical polymerization retarder (e.g., 1,1-diphenyl-2-picrylhydrazyl).

The electrolytes can also be polymer gels containing lithium, sodium, and potassium salts as taught in United States Patent No. 5,639,573 by Oliver. Oliver teaches a polymer gel electrolyte system for use in an electrochemical cell having positive and negative electrodes. The polymer gel electrolyte system comprises: a liquid electrolyte active species (e.g., propylene carbonate) for promoting ion transport between the positive and the negative electrodes and a multiphase polymer blend gel electrolyte support structure including at least a first polymer phase (e.g., polyvinylidene difluoride) for absorbing the electrolyte active species, and a second polymer phase (e.g., porous high density polyethylene) which is non-absorbing or inert to the electrolyte and hence is provided to enhance the mechanical strength or integrity of the polymer electrolyte system.

Finally, the electrolytes can be flexible solid polymer films containing a lithium salt dissolved in a polymer-compatible solvent as taught in United States Patent No. 5,296,318 by Gozdz. Gozdz teaches a solid electrolyte for a rechargeable lithium intercalation battery cell having a lithium salt dispersed in a polymeric matrix characterized in that the electrolyte has a substantially self-supporting film of a copolymer of 75% to 92% vinylidene difluoride with 8% to 25% hexafluoropropylene, wherein the self-supporting film has homogeneously distributed therein 20% to 70% by weight of a solution of at least one lithium salt (e.g., lithium hexafluorophosphate) in a medium-boiling solvent (e.g., a 1:1 mixture of EC:PC).

Neither the electrode materials nor the electrolytes of the secondary elements which embody the second aspect of the present invention pose particular difficulties for the construction of practical cells, or to the battery assembly process. For example, the electrodes can be produced in compact form, which makes them easily usable for assembly. If desired, the electrodes can be united simply by means of an adhesive. For tight constructions, and in conjunction with liquid electrolytes, the electrodes can be electrically isolated from each other with a separator material of the type which is conventionally used in lithium cells. Separator materials can suitably be a porous film less than 500 microns in thickness of one or more polymers selected from the group consisting of polyethylene, polypropylene, polytetrafluoroethylene, polystyrene, polyethyleneterephthalate, ethylene propylene diene monomer, nylon, and combinations thereof. Separator materials can also suitably be a porous film less than 500 microns in thickness of one or more inorganic materials such as silicon oxide, aluminum oxide, zeolites, lithium nitride, and the like.

Particularly desirable is a strengthening of the electrodes by means of electrically conductive metal support structures, especially when these simultaneously function as the current collector. In a particularly desirable embodiment of the secondary element of the second aspect of the present invention, the negative electrode has a current collector of nickel, copper or high-grade steel, and the positive electrode has a current collector of aluminum or high-grade steel.

The method for preparing phase-pure refractory-metal-doped lithium manganate spinel powders of the present invention uses a spray pyrolysis method. This method provides an acidic aqueous composition ("feed solution") including water, lithium ions, manganese ions, and refractory metal ions selected from the group consisting of titanium ions, zirconium ions, hafnium ions, vanadium ions, niobium ions, tantalum ions, molybdenum ions, and tungsten ions, and combinations thereof, forming droplets of the acidic aqueous composition, and heating the droplets in an oxygen-containing atmosphere to a temperature from 400°C to 1100°C to form a phase-pure refractory-metal-doped lithium manganate spinel powder.

The acidic aqueous composition is provided for by mixing the lithium ions, manganese ions, and refractory metal ions which are typically supplied as aqueous solutions of their ammonium, nitrate, or oxynitrate salts. Aqueous lithium nitrate having a lithium ion concentration between 40,000 ppm and 60,000 ppm is mixed with aqueous manganese nitrate having a manganese ion concentration between 190,000 ppm and 250,000 ppm, and doped with a refractory metal salt. Refractory metal salts are listed in Table 2. The aqueous solution is maintained acidic by addition of dilute nitric acid to prevent precipitation of metal salts in the aqueous solution. For example, for each 1 kg lithium nitrate dissolved, 200 ml of a 3.45% nitric acid solution is added to the aqueous solution; for each 1 kg manganese nitrate dissolved, 33 ml of 3.45% nitric acid solution is added to the aqueous solution.

The feed solution is charged into a suitable spray pyrolysis unit. Droplets of the feed solution are formed by passing the feed solution with a pressurized carrier gas over a mechanism which disrupts the aqueous solution into droplets. Suitable mechanisms for disrupting the aqueous solution and forming droplets include for example vibrating plates, ultrasonic generators and megasonic generators, and nebulizers.

In a preferred embodiment of the present invention, the overall flowrate of air and solution through a suitable nebulizer and a pyrolysis tube is 0.2 to 2.0 liters per minute ("1/min"), preferably 0.7 to 1.5 l/min as measured using a wet test meter; the flow rate of the solution through a suitable nebulizer can be 0.2 to 20 milliliters per minute ("ml/min"), preferably 2 ml/min; a majority ("more than half') of the droplets thus formed are recycled to the solution while a minority ("less than half') of the droplets enter the pyrolysis tube. The rate fraction of the droplets entering the pyrolysis tube ("production rate") is between 0.2 and 20 milliliters per hour ("ml/hr"), and is preferably between 1 and 5 ml/hr.

Heating the droplets can be accomplished in a pyrolysis tube made of a suitable material, such as quartz, which can withstand temperatures up to 1100°C. The pyrolysis tube is inserted in an oven which can provide temperatures up to 1100°C. The droplets are heated to between 400°C and 1100°C, preferably between 600°C and 900°C, and more preferably between 750° and 850°C. Oxygen is suitably provided by using pressurized air as the carrier gas. Doped lithium manganate spinel powder product is collected on a powder collection assembly having a submicron filter held in a filter press that is attached to the pyrolysis tube. The powder collection assembly is heated to between 110°C and 120°C with heating tape to prevent condensation of water. The apparatus described herein (the spray pyrolysis unit) is operated continuously in the foregoing manner. The metal-doped lithium manganate spinel powder is removed from the filter. The compositions of the metal-doped lithium manganate spinel powders are readily determined by the stoichiometry of the lithium, metal-dopant, and manganese atoms in the feed solutions.

The following Examples are intended to illustrate various embodiments of the present invention.

## EXAMPLES

The following procedure was used to prepare phase-pure metal-doped lithium manganate compositions by spray pyrolysis. An aqueous spray pyrolysis feed solution containing a mixture of lithium nitrate, manganese nitrate, and a metal-dopant salt solution (Spex ICP standards) were mixed in a beaker and charged into a 15 mm diameter, 40 cm tall column fitted with #11 Ace-Threads at either end. In the bottom of a #11 treaded Teflon® fitting, a 100 micron polyethylene filter was present and the column was connected via 3mm polyethylene tubing to a peristaltic pump. The feed solution was transferred to a Meinhard® TR-30-A4 nebulizer using compressed air to generate a nebulizing pressure of 2.5 Bar . The nebulizer was coupled via an Ace glass #5827 feed tube connector to a 19mm OD quartz glass tube with a 3mm thick wall. The connector aligned the nebulizer in the quartz tube and recycled excess or condensed mist back to the column containing the feed solution. Kal-Rez o-rings were used to form the air tight seals in this connector. The feed solution was maintained at low pH by addition of dilute nitric acid to prevent precipitation of metal salts in the feed solution.

The overall flowrate of air and feed solution through the nebulizer and quartz pyrolysis tube was 1.05 l/min measured using a wet test meter; the flow rate of the aqueous feed solution through the nebulizer was 2.0 ml/min. Most of the aqueous feed solution was recycled, resulting in an actual production rate of about 2 ml/hr after achieving steady state. The quartz tube was heated in a Lindberg 10 cm diameter tube furnace and the temperature was controlled to maintain a temperature within the quartz tube of between 820°C and 830°C. Doped lithium manganate spinel powder was collected on a powder collection assembly having a 0.45 micron filter or a 0.22 micron filter held in a Gelman® 47 mm stainless steel filter press that was attached to the quartz tube via a Cajon® Ultra-Torr fitting. The powder collection assembly was heated to between 110°C and 120°C with heating tape. The apparatus described herein (the spray pyrolysis unit) was operated continuously in the foregoing manner from 14 to 18 hours. The refractory metal-doped lithium manganate spinel powder was removed from the filter. The compositions of spinel powders were readily determined by the stoichiometry of the lithium, refractory metal ion, and manganese atoms in the feed solutions. The feed solutions used to prepare Examples 1-16 and the resulting compositions of Examples 1-16 are listed in Table 2.

## COMPARATIVE EXAMPLES

The following procedure, as taught in Japanese Patent Publications Kokai No. Hei 09-245836, was used to prepare comparative zirconium-doped lithium manganate spinel compositions. Lithium hydroxide (Aldrich 99.95%), manganese dioxide (Chemetals EMD grade), and zirconium hydroxide (XZO 632/03) solid powders were ground together with acetone in an agate mortar and pestle. After the acetone evaporated, the mixture was dried in a vacuum oven at 50°C for two hours. The mixture was placed in an Aldrich KBr die (1.2cm diameter) and pressed at 135 MPa for two minutes to form pellets. The pellets were placed in alumina boats which were inserted into a quartz tube. Air was passed through the quartz tube at a rate of 0.1 l/min. The pellets were baked at 400°C for 12 hours, followed by baking at 750°C for 36 hours. These pellets were subsequently ground into powder. Comparative Example A was prepared using 0.505 g lithium hydroxide, 2.000 g manganese dioxide, and 0.039 zirconium hydroxide to form a mixture having an overall stoichiometric composition $Li_{1.02}Zr_{0.02}Mn_{1.95}O_4$. Comparative Example B was prepared using 0.495 g lithium hydroxide, 2.000 g manganese dioxide, and 0.098 zirconium hydroxide to form a mixture of overall stoichiometric composition $Li_{1.00}Zr_{0.05}Mn_{1.95}O_4$.

Commercially-available lithium manganate spinel materials were also tested as comparative examples. Comparative Example C is undoped lithium manganate spinel "Standard Material (SS1)" from Kerr-McGee Chemical Corporation, Oklahoma City, OK. Comparative Example D is undoped lithium manganate spinel T-202 from Chemetals Corporation, Baltimore, MD. Comparative Example E is undoped lithium manganate spinel T-204 from Chemetals Corporation, Baltimore, MD. Comparative Example F is lithium manganate spinel doped with ~0.3% by weight cobalt, "Lectro™Plus 300" from FMC Corporation, Bessemer City, NC. Comparative Example G is lithium manganate spinel doped with 0.6% by weight chromium (Lot 20056), from Covalent Associates, Inc., Woburn, MA.

The following procedure was used to measure the phase purity of the metal-doped lithium manganate spinel powders. An aluminum XRD sample holder measured 36mm wide, 42mm long, and had a 2mm x 15mm x 20mm well on one end. Powder was poured and tapped or pressed down into the well of the sample holder. A microscope slide or other straight sharp edge was dragged over the surface of the powder to make the powder surface flush with the sample holder. The sample holder was inserted into a Philips APD 3720 x-ray powder diffractometer. X-ray diffraction (XRD) patterns of the powders were collected using monochromated copper K-alpha radiation at room temperature over the range in 2theta from 10 to 90 degrees at intervals of 0.1 degrees. XRD patterns were collected for 10 seconds at each interval in 2theta and consisted of a number of sharp diffraction peaks characteristic of the crystal structure of the composition. The diffraction peaks so obtained were measured for their peak positions, reported as "d-spacing" in units of Angstroms, and percent relative intensity using "PC-APD Diffraction Software" available with the Philips APD 3720 x-ray powder diffractometer. The substantial absence of XRD peaks different than those assigned to lithium manganate (File No. 35-0782 $LiMn_2O_4$) indicated that the sample was phase pure. The XRD results are listed in Table 3.

The following procedure was used to prepare electrodes for fabricating secondary electrochemical test cells. Electrodes were prepared by mixing 80 parts lithium manganate spinel powder with 13 parts Essegri Super S® carbon powder and 7 parts Atochem KynarFlex® 2801-00 polyvinylidene difluoride binder prepared as a 10 to 12% solution in 1-methyl-2-pyrrolidinone (NMP). The carbon and lithium manganate spinel powders were ground in separate agate mortars and combined. The binder was added to the mixed powders, followed by more grinding. NMP was added and the mixture ground until a smooth creamy paste was obtained. The paste was subsequently worked through a Spectramesh® 41 μm mesh nylon screen and cast as an electrode film onto 18 μm thick aluminum foil using a doctor blade with a 250 μm gap. The electrode film was dried in a forced-air oven at 80°C for one hour and pressed between two polished steel plates at 1.4 MPa for two minutes. Electrode disks, 1.2 cm diameter, were punched from the electrode film and kept under vacuum at 140°C for 16 to 72 hours.

The following procedure was used to fabricate a secondary electrochemical cell for testing an active electrode incorporating metal-doped lithium manganate spinel powder. Electrochemical cycle testing was carried out in a cell incorporating a Swagelock™ T-fitting ("T-cell") constructed of Teflon™ polytetrafluoroethylene resin. The cell was assembled in an argon filled dry box by placing lithium foil ("anode" or "negative electrode") on one stainless steel rod, with the active electrode ("cathode" or "positive electrode") on top of another stainless steel rod, and inserting at least one Hoechst Celguard™ polypropylene separator between the lithium foil and the active electrode. A few drops of a standard electrolyte from E. Merck Industries consisting of a one molar solution of $LiBF_4$ in ethylene carbonate/diethyl carbonate (EC/DEC) solvent was added to the cell between the lithium foil and the active electrode. The cell was assembled by squeezing the stainless steel rods together, adding additional electrolyte solution, and sealing air-tight by tightening the Swagelock™ T-cell. The assembled cell was removed from the Argon-filled drybox and transferred to a forced-air oven held at 50°C. The cell was held together with a plastic clamp. Metal wire and alligator clips were used to connect the test cell to a secondary electrochemical cell cycle testing instrument.

The following procedure was used to test secondary electrochemical cells for their electrochemical discharge capacity. Electrochemical cycle testing of the secondary electrochemical cells was carried out on a battery testing unit manufactured by Arbin Instruments, College Station, Texas. The cells were tested in a constant current, variable voltage mode cycling between 3 volts and 4.3 volts versus lithium. In some cases the voltage was also allowed to rise from 4.3 volts to 4.5 volts. Each charge and discharge cycle period was five hours. As the voltage reached either endpoint, there was a two minute, constant voltage, variable current hold period. The total amount of electrical current (number of coulombs) released and absorbed by the cell during discharge and charge, respectively, was recorded by the tester; the mass of active material in the cell and the number of coulombs was used to calculate the capacity in milliamp-hours/gram (mAh/g). Automatic cycle testing was continued for at least 20 cycles to determine the discharge capacity fade rate, defined as the decrease in the discharge capacity per cycle (mAh/g/cycle). The data appear in Tables 2, 3, and 4 below.

## Table 2: Synthesis of Lithium Manganate Spinel Powders

| Ex. | M | Metal Dopant Amount (ml) | Metal Dopant Conc. (ppm) | Lithium Nitrate[a] Amount (ml) | Lithium Nitrate[a] Conc. (ppm) | Manganese Nitrate[b] Amount (ml) | Manganese Nitrate[b] Conc. (ppm) | $Li_qM_xMn_yO_{4+\delta}$ q | $Li_qM_xMn_yO_{4+\delta}$ x | $Li_qM_xMn_yO_{4+\delta}$ y |
|---|---|---|---|---|---|---|---|---|---|---|
| 1 | Zr[c] | 7.52 | 10,000 | 6.25 | 46,700 | 20.00 | 220,660 | 1.00 | 0.02 | 1.98 |
| 2 | Zr[c] | 18.79 | 10,000 | 6.12 | 46,700 | 20.00 | 220,660 | 1.00 | 0.05 | 1.98 |
| 3 | Ti[d] | 1.48 | 10,000 | 4.77 | 49,340 | 16.6 | 192,710 | 1.10 | 0.01 | 1.99 |
| 4 | Zn[e] | 12.75 | 10,000 | 5.21 | 49,600 | 16.55 | 223,020 | 1.05 | 0.055 | 1.945 |
| 5 | W[f] | 28.61 | 10,000 | 2.16 | 50,120 | 7.41 | 219,200 | 1.00 | 0.10 | 1.90 |
| 6 | Mo[g] | 23.88 | 10,000 | 3.41 | 55,800 | 12.77 | 192,710 | 1.10 | 0.10 | 1.90 |
| 7 | Hf[h] | 3.99 | 10,060 | 3.12 | 50,120 | 22.46 | 219,200 | 1.00 | 0.01 | 1.99 |
| 8 | Zr[c] | 0.52 | 10,000 | 8.44 | 49,600 | 27.59 | 223,020 | 1.05 | 0.001 | 1.999 |
| 9 | Zr[c] | 17.15 | 10,000 | 1.5 | 49,600 | 16.55 | 223,020 | 0.979 | 0.055 | 1.945 |
| 10 | Nb[i] | 20.92 | 1,000 | 2.80 | 55,800 | 12.77 | 192,710 | 1.00 | 0.01 | 1.99 |
| 11 | V[j] | 12.68 | 10,000 | 3.41 | 55,800 | 12.77 | 192,710 | 1.00 | 0.10 | 1.90 |
| 12 | none | . | . | 3.07 | 55,795 | 10 | 246,310 | 0.937 | 0.00 | 2.00 |
| 13 | Cr[k] | 23.3 | 1,000 | 4.11 | 41,540 | 10.0 | 246,310 | 1.10 | 0.01 | 1.99 |
| 14 | Ga[l] | 31.2 | 1,000 | 3.7 | 41,540 | 10.0 | 246,310 | 1.00 | 0.02 | 1.98 |
| 15 | Al[m] | 0.64 | 10,000 | 2.95 | 55,800 | 10.0 | 246,310 | 1.00 | 0.01 | 1.89 |
| 16 | Ni[n] | 13.15 | 10,000 | 3.7 | 41,540 | 9.5 | 246,310 | 1.00 | 0.10 | 1.90 |

a  
a  Lithium Nitrate - Alfa Aesar, 99%  
b  Manganese Nitrate - Alfa Aesar, 99.98%  
c  Zirconium Oxynitrate - Magnesium Elektron Inc., 99+%  
d  Ammonium Hexafluorotitanate - SPEX ICP standard  
e  Zinc Nitrate - SPEX ICP standard  
f  Ammonium Tungstate- SPEX ICP standard  
g  Ammonium Molybdate- SPEX ICP standard  
h  Hafnium Oxychloride- SPEX ICP standard  
i  Ammonium Hexafluoroniobate- SPEX ICP standard  

j  Ammonium Vanadate- SPEX ICP standard  
k  Chromium Nitrate- SPEX ICP standard  
l  Gallium Nitrate- SPEX ICP standard  
m  Aluminum Nitrate- SPEX ICP standard  
n  Nickel Nitrate - SPEX ICP standard

## Table 3: XRD Results

| Sample | M (x) | Diffraction Peaks Related to Lithium Manganate Spinel | | | | | | | | Strongest Diffraction Peaks, Not From Spinel | | |
|---|---|---|---|---|---|---|---|---|---|---|---|---|
| Ref. 35-0782 LiMn$_2$O$_4$ | none | 4.764 / 100 | 2.487 / 38 | 2.381 / 10 | 2.062 / 33 | 1.892 / 7 | 1.587 / 10 | 1.458 / 16 | 1.394 / 7 | | | |
| Ref. 37-1484 ZrO$_2$ | not applicable | | | | | | | | | 3.165 / 100 | 2.841 / 68 | 2.623 / 21 |
| Ref. 24-508 Mn$_2$O$_3$ | not applicable | | | | | | | | | 3.844 / 18 | 2.719 / 100 | 1.664 / 27 |
| Ex. 1 | Zr (0.02) | 4.762 / 95.6 | 2.485 / 85.1 | 2.379 / 18.3 | 2.060 / 100 | 1.890 / 17.8 | 1.587 / 38.9 | 1.458 / 70.4 | 1.393 / 25.6 | - | - | - |
| Ex. 2 | Zr (0.05) | 4.759 / 85.1 | 2.486 / 78.9 | 2.379 / 19.5 | 2.060 / 100 | 1.890 / 18.0 | 1.586 / 36.9 | 1.458 / 65.1 | 1.393 / 26.8 | - | - | - |
| Comparative Ex. A | Zr (0.02) | 4.751 / 100 | 2.483 / 78.1 | 2.377 / 19.7 | 2.059 / 92.9 | 1.889 / 19.3 | 1.586 / 34.8 | 1.457 / 67.2 | 1.393 / 26.4 | 3.158 / 1.6 | 2.843 / 1.0 | 1.815 / 1.1 |
| Comparative Ex. B | Zr (0.05) | 4.758 / 100 | 2.485 / 70.5 | 2.378 / 19.0 | 2.060 / 84.6 | 1.891 / 17.5 | 1.586 / 31.0 | 1.457 / 55.1 | 1.393 / 21.8 | 3.169 / 5.5 | 2.842 / 3.9 | 2.627 / 1.9 |
| Comparative Ex. C | none | 4.761 / 100 | 2.482 / 72.8 | 2.376 / 13.6 | 2.060 / 88.3 | 1.889 / 18.0 | 1.585 / 31.8 | 1.457 / 50.8 | 1.392 / 23.7 | 2.730 / 0.5 | 2.162 / 0.7 | 1.659 / 0.3 |
| Comparative Ex. D | none | 4.772 / 100 | 2.483 / 73.0 | 2.376 / 16.6 | 2.060 / 86.5 | 1.888 / 16.6 | 1.584 / 31.9 | 1.456 / 55.4 | 1.392 / 22.2 | 3.826 / 0.7 | 2.731 / 0.5 | 2.155 / 0.9 |
| Comparative Ex. E | none | 4.765 / 100 | 2.485 / 76.7 | 2.380 / 16.6 | 2.062 / 82.8 | 1.889 / 18.0 | 1.585 / 32.7 | 1.456 / 58.2 | 1.387 / 13.8 | 2.730 / 0.3 | 2.156 / 1.0 | 2.028 / 4.8 |
| Comparative Ex. F | Co (~0.3% wt.) | 4.753 / 91.1 | 2.482 / 80.4 | 2.376 / 16.8 | 2.058 / 100 | 1.889 / 19.6 | 1.586 / 36.6 | 1.457 / 67.0 | 1.393 / 27.3 | 4.198 / 0.4 | - | - |
| Comparative Ex. G | Cr (0.6% wt) | 4.765 / 100 | 2.484 / 73.1 | 2.378 / 18.2 | 2.059 / 82.0 | 1.889 / 17.8 | 1.585 / 31.1 | 1.455 / 61.8 | 1.392 / 25.5 | - | - | - |

### Table 4: Discharge Capacity and Fade Rate of Cells Versus Composition at 50°C.

| Cathode Active Material | | | Discharge Capacity, mAh/g At Given Cycle Number | | | | | | | | | | Fade Rate, |
|---|---|---|---|---|---|---|---|---|---|---|---|---|---|
| Ex. | M | x | 5 | 10 | 15 | 20 | 25 | 30 | 35 | 40 | 45 | 50 | mAh/g/cycle |
| 3 | Ti | 0.01 | 102 | 99 | 98 | 95 | - | - | - | - | - | - | 0.47[a] |
| 4 | Zn | 0.01 | 86 | 83 | 81 | 78 | 78 | 73 | - | - | - | - | 0.52[a] |
| 5 | W | 0.01 | 108 | 101 | 91 | 85 | 84 | 80 | 72 | 73 | 72 | 71 | 0.82[a] |
| 6 | Mo | 0.10 | 114 | 109 | 109 | 106 | 105 | 104 | 103 | 102 | 100 | 99 | 0.33[a] |
| 7 | Hf | 0.01 | 88 | 86 | 84 | 83 | 82 | 81 | 80 | 79 | 78 | 78 | 0.22[a] |
| 8 | Zr | 0.001 | 99 | 94 | 95 | 93 | 95 | 95 | 97[b] | 96[b] | 95[b] | 94[b] | 0.16[c] |
| 9 | Zr | 0.055 | 108 | 105 | 101 | 103 | 102 | 102 | 100 | 100 | 103[b] | 102[b] | 0.23[c] |
| 10 | Nb | 0.10 | 95 | 95[b] | 84[b] | 82[b] | 86[b] | 73[b] | 69[b] | 74[b] | 70[b] | 71[b] | 0.60[d] |
| 11 | V | 0.10 | 100 | 103[b] | 94[b] | 81[b] | 80[b] | - | - | - | - | - | 1.53[d] |
| 12 | none | | 112 | 116[b] | 114[b] | 113[b] | 111[b] | 110[b] | 108[b] | 104[b] | 103[b] | 100[b] | 0.40[d] |
| 13 | Cr | 0.01 | 108 | 105 | 102 | 99 | - | - | - | - | - | - | 0.60[a] |
| 14 | Ga | 0.02 | 85 | 69[b] | 68[b] | 67[b] | 67[b] | 66[b] | 66[b] | 65[b] | 58[b] | - | 0.31[d] |
| 15 | Al | 0.01 | 110 | 113[b] | 109[b] | 107[b] | - | - | - | - | - | - | 0.60[d] |
| 16 | Ni | 0.10 | - | 97[b] | 94[b] | 93[b] | 90[b] | 86[b] | 87[b] | 84[b] | 78[b] | 75[b] | 0.55[d] |
| Comp. Ex. C | none | | 112 | 110 | 108 | 105 | 102 | 100 | 97 | 94 | 91 | 89 | 0.51[a] |
| Comp. Ex. D | none | | 103[b] | 101[b] | 100[b] | 98.8[b] | 97.3[b] | 96.2[b] | 95.1[b] | - | - | - | 0.26[a] |
| Comp. Ex. E | none | | 117 | 114 | 112 | 110 | 109 | 108 | 106 | 105 | 104 | 102 | 0.33[a] |
| Comp. Ex. F | Co | 0.3% wt. | 121 | 119 | 118 | 116 | 114 | 113 | 112 | 111 | 109 | 108 | 0.29[a] |
| Comp. Ex. G | Cr | 0.6% wt. | 119 | 116 | 114 | 112 | 110 | 109 | 108 | 106 | 105 | 103 | 0.36[a] |

[a] Fade Rate is defined as (Cycle 5 - Last Cycle Measured)/(Number of Cycles)

[b] Discharge voltage was 4.5 volts

[c] Fade Rate is defined as (Cycle 5 - Last Cycle Measured Prior to Increasing Voltage to 4.5 volts) / (Number of Cycles)

[d] Fade Rate is defined as (Cycle 10 - Last Cycle Measured) / (Number of Cycles)

The results appearing in Table 3 show that refractory-metal-doped lithium manganate spinel compositions are substantially phase-pure when prepared by the spray pyrolysis method, whereas compositions prepared by the comparative solid state method are not substantially phase-pure. Furthermore, the compositions according to this invention have x-ray diffraction patterns wherein the d-spacings of the eight strongest diffraction peaks are at 4.76, 2.49, 2.38, 2.06, 1.89, 1.59, 1.46, and 1.39 Angstroms. Furthermore, the compositions according to this invention have x-ray diffraction pattern wherein diffraction peaks at d-spacings of 3.17, 2.84, and 2.62 Angstroms are substantially absent. Here, "substantially absent" refers to diffraction peaks having relative intensities less than one when the most intense diffraction peak is assigned a value of 100.

The results appearing in Table 4 show that secondary electrochemical cells incorporating electrodes prepared with substantially phase-pure refractory-metal-doped lithium manganate spinel compounds advantageously have lower discharge capacity fade rates than secondary electrochemical cells incorporating electrodes prepared with refractory-metal-doped lithium manganate spinel compounds which are not substantially phase pure. The results also show that secondary electrochemical cells incorporating electrodes made with substantially phase-pure lithium manganate spinel compounds doped with the refractory metals zirconium, hafnium, and molybdenum have discharge capacity fade rates lower than secondary electrochemical cells incorporating electrodes made with undoped lithium manganate spinel (0.40 mAh/g/cycle).

## Claims

1. A compound of the formula $Li_qM_xMn_yO_z$, wherein M is a refractory metal selected from the group consisting of titanium, zirconium, hafnium, vanadium, niobium, tantalum, molybdenum, tungsten, and mixtures thereof,

   q is in the range of from 0 to 1.3,
   x is in the range of from 0.0001 to 0.2,
   y is in the range of from 1.8 to 2.0,
   z is in the range of from 3.8 to 4.2, and

   wherein said compound is substantially phase pure.

2. The compound of claim 1 wherein M is a refractory metal selected from the group consisting of zirconium, hafnium, molybdenum, and mixtures thereof.

3. The compound of claim 1 wherein x is in the range of from 0.001 to 0.10.

4. The compound of claim 1 wherein the compound has an x-ray diffraction pattern wherein the d-spacings of the eight strongest diffraction peaks are at 4.76, 2.49, 2.38, 2.06, 1.89, 1.59, 1.46, and 1.39 Angstroms.

5. An electrochemical secondary element comprising a positive electrode, a negative electrode, and a non-aqueous electrolyte, wherein at least one electrode comprises a compound of the formula $Li_qM_xMn_yO_z$, wherein

   M is a refractory metal selected from the group consisting of titanium, zirconium, hafnium, vanadium, niobium, tantalum, molybdenum, tungsten, and mixtures thereof,
   q is in the range of from 0 to 1.3,
   x is in the range of from 0.0001 to 0.2,
   y is in the range of from 1.8 to 2.0,
   z is in the range of from 3.8 to 4.2, and

   wherein said compound is substantially phase pure.

6. The electrochemical secondary element of claim 5 wherein x is in the range of from 0.001 to 0.10.

7. A method for preparing a substantially phase-pure refractory-metal-doped lithium manganate spinel powder of the formula $Li_qM_xMn_yO_z$, wherein

   M is a refractory metal selected from the group consisting of titanium, zirconium, hafnium, vanadium, niobium, tantalum, molybdenum, tungsten, and mixtures thereof,
   q is in the range of from 0 to 1.3,

x is in the range of from 0.0001 to 0.2,
y is in the range of from 1.8 to 2.0, and
z is in the range of from 3.8 to 4.2,

comprising

   i) providing an acidic aqueous composition comprising

      a) lithium ions,
      b) manganese ions, and
      c) refractory metal ions selected from the group consisting of titanium ions, zirconium ions, hafnium ions, vanadium ions, niobium ions, tantalum ions, molybdenum ions, and tungsten ions, and combinations thereof,

   ii) forming droplets of the composition, and
   iii) heating the droplets in an oxygen-containing atmosphere to a temperature in the range of from 400°C to 1100°C to form the powder.

8. A substantially phase-pure refractory-metal-doped lithium manganate spinel powder produced by the method of claim 7.

9. An electrochemical secondary element comprising the powder of claim 8.